# EUROPEAN PATENT APPLICATION

(11) **EP 4 576 322 A1**
(43) Date of publication of application: **25.06.2025**
(21) Application number: 23927228.9
(22) Date of filing: 22.12.2023
(51) Int. Cl.: H01M 10/48

(54) **BATTERY CELL, BATTERY, AND ELECTRIC APPARATUS**

(30) Priority: 15.03.2023 CN 202320500996 U
(71) Applicant: Contemporary Amperex Technology (Hong Kong) Limited, Central (HK)
(72) Inventor: XIONG, Xueqing, Ningde, Fujian 352100 (CN); GE, Xiaoming, Ningde, Fujian 352100 (CN); WANG, Yiheng, Ningde, Fujian 352100 (CN); ZHENG, Yilin, Ningde, Fujian 352100 (CN)
(74) Representative: von Tietzen und Hennig, Nikolaus
(86) International application number: PCT/CN2023/141231
(87) International publication number: WO 2024/187888

(57) **Abstract**

The present application relates to a battery cell, a battery, and an electric apparatus. The battery cell comprises a housing, an electrode assembly, and a temperature acquisition member. The housing comprises a plurality of walls that define a first chamber, and at least one wall has a second chamber formed therein. The electrode assembly is accommodated in the first chamber. The temperature acquisition member is accommodated in the second chamber. By arranging the temperature acquisition member in the second chamber, the temperature acquired by the temperature acquisition member is more approximate to the actual temperature of the electrode assembly, thereby instantly reflecting the temperature rise of the electrode assembly and reducing the probability of thermal runaway of the battery cell.

## Description

### CROSS-REFERENCE TO RELATED APPLICATION

The present application claims priority to Chinese Patent Application No. 202320500996.7 filed on March 15, 2023 and entitled "BATTERY CELL, BATTERY, AND ELECTRIC APPARATUS", the content of which is incorporated herein by reference in its entirety.

### TECHNICAL FIELD

The present application relates to the field of batteries, and in particular, to a battery cell, a battery, and an electric device.

### BACKGROUND

With the widespread use of electric devices such as electric vehicles, electric flying devices, and portable electronic devices, the performance of batteries is an important factor in the development of technologies of electric devices.

A battery is composed of a plurality of battery cells. During the charging and discharging of the battery cell, the electrode assembly in the battery cell may be short-circuited or may experience a local high temperature. As a result, the temperature of the electrode assembly rises uncontrollably. The uncontrollable rising of the temperature of the electrode assembly will lead to the thermal runaway of the battery cell, affect the performance of the battery, and even result in the combustion or explosion.

### SUMMARY

An objective of embodiments of the present application is to provide a battery cell, a battery, and an electric device to reduce the probability of thermal runaway in the battery cell.

An optional solution of the present application provides a battery cell, which may include: a shell, including a plurality of walls, the plurality of walls defining a first chamber and a second chamber is formed inside at least one of the walls; an electrode assembly, accommodated in the first chamber; and a temperature sampling member, accommodated in the second chamber.

Because the temperature sampling member is located in the second chamber inside the wall and the temperature sampling member is close to the first chamber and the electrode assembly, the temperature detected by the temperature sampling member is closer to the actual temperature of the first chamber or the electrode assembly. This helps to improve the accuracy of the acquired temperature, such that the battery control system can respond to an abnormal temperature of the battery cell in time, reducing the probability of thermal runaway and thereby improving the operational stability of a battery.

Furthermore, the second chamber further helps to reduce the risk of the temperature sampling member being in direct collision with other external objects and thereby reduces the risk of the temperature sampling member falling off from the battery cell. This enables the battery cell to have good operational stability.

In an optional solution, there are a plurality of temperature sampling members, and the plurality of temperature sampling members are distributed at a plurality of positions in the second chamber.

By providing the temperature sampling members at a plurality of positions of the battery cell, the temperatures of a plurality of positions of the battery cell can be monitored, such that the temperature information of the battery cell is more comprehensively grasped, and local abnormal temperature rise and an abnormally high temperature can be detected in time, thereby further reducing the risk of thermal runaway.

In an optional solution, a wall with a largest area among the plurality of walls is a first wall, the second chamber is formed inside the first wall, and at least one of the temperature sampling members is disposed in the first wall and located at a center of the first wall.

The first wall may usually be referred to as a body region of the battery cell or as a large surface, and is used to refer to a wall with a largest or larger area among the plurality of walls. Since the body region is prone to have production defects, by providing the temperature sampling member at the center of the body region, the temperature at the center of the body region can be monitored in real time. This helps to improve the prevention effect and reduce the probability of thermal runaway. Furthermore, the overall temperature of the electrolyte can be more accurately grasped by acquiring the temperature at the center of the body region, such that the temperature detection can be comprehensive and accurate.

In an optional solution, the electrode assembly includes a positive electrode plate and a negative electrode plate, the negative electrode plate includes a body region overlapping the positive electrode plate and an extension region extending beyond an edge of the positive electrode plate, and at least one of the temperature sampling members is disposed at a position corresponding to the region of the negative electrode plate extending beyond the edge of the positive electrode plate.

The region of the negative electrode plate extending beyond the edge of the positive electrode plate is the extension region. Due to the influence of the process or use condition, heat accumulation and a short circuit easily occur in the extension region. Detecting the temperature of the extension region helps to detect the abnormal temperature rise in the extension region in time and respond to it, thereby reducing the probability of thermal runaway.

In an optional solution, the electrode assembly includes a tab, and at least one of the temperature sampling members is disposed at a position corresponding to the tab.

The tab region is prone to have production defects. Therefore, a short circuit easily occurs in the tab region. Detecting the temperature of the tab region helps to detect the abnormal temperature rise in the tab region in time and respond to it, thereby reducing the probability of thermal runaway.

In an optional solution, the electrode assembly includes a turning region, and at least one of the temperature sampling members is disposed at a position corresponding to the turning region.

Heat accumulation easily occurs in the turning region. Detecting the temperature of the turning region helps to detect the abnormal temperature rise in the turning region in time and respond to it, thereby reducing the probability of thermal runaway.

In an optional solution, the battery cell further includes a connector, where the connector is connected to an outer surface of the shell, and the temperature sampling member is in telecommunication connection to the connector.

Because the connector is disposed on the outer surface of the shell of the battery cell and the connection method for the connector is simple, the battery control system can be easily allowed to be in telecommunication connection to the temperature sampling member while the battery is assembled, thereby simplifying the assembly process.

In an optional solution, the battery cell further includes a wire harness, the connector is connected to the temperature sampling member via the wire harness, and at least a part of the wire harness is accommodated in the second chamber.

The temperature sampling member usually transmits signals through the wire harness, but having too many wiring harnesses makes them difficult to organize. Allowing a part of the wire harness to be accommodated in the second chamber makes it more convenient to receive and organize the wire harness, such that the outer surface of the battery cell can be neater, thereby facilitating mounting. In addition, this solution also helps to reduce the probability of the wire harness being pulled or in collision with an external object, thereby reducing the risk of the temperature sampling member falling off because of the pulling by the wire harness.

In an optional solution, the shell includes a shell body and an end cover, the shell body includes an opening, the end cover seals the opening, the second chamber is formed in the shell body, and the connector is disposed on an outer surface of the end cover.

Because the connector is disposed on the outer surface of the end cover, the connector is easily plugged into a connection head of the battery control system. Furthermore, because the shell bodies of battery cells are close to or in contact with each other when the battery cells are assembled into a battery, the interference caused by adjacent battery cells to connectors disposed on the surfaces of the end covers is little. Therefore, when the adjacent battery cells are mounted, less interference occurs between the adjacent battery cells, thereby enabling a mounting method to be more convenient.

In an optional solution, at least one of the walls includes an outer layer wall and an inner layer wall spaced apart from each other, and the second chamber is formed between the outer layer wall and the inner layer wall.

The inner layer wall and the outer layer wall may be manufactured separately. After the inner layer wall and the outer layer wall are fixedly connected to each other, the gap between the inner layer wall and the outer layer wall forms the second chamber. It can be seen that the solution helps to simplify the manufacturing process of the second chamber.

In an optional solution, the inner layer wall is an aluminum-plastic film, or a material of the inner layer wall is aluminum or aluminum alloy; and/or a material of the outer layer wall is aluminum, aluminum alloy, or steel.

Aluminum and steel have good corrosion resistance. When the material of the outer layer wall is steel, the outer layer wall additionally has good strength. This helps to reduce the probability of deformation of the battery cell and reduce the severity of damage to a power battery after collision. When the material of the inner layer wall is the aluminum-plastic film or aluminum, the inner layer wall additionally easily deforms. The second chamber provides a swelling space for the inner layer wall to adapt to the swelling of the first chamber during use. This helps to increase the service life of the battery cell.

In an optional solution, a flame-retardant layer is disposed on a surface of the second chamber.

Providing the flame-retardant layer helps to reduce the risk of the combustion spreading outside the battery cell.

In an optional solution, the battery cell further includes a flame-retardant material, and the flame-retardant material is accommodated in the second chamber.

After the inner layer wall melts down, the flame-retardant material in the second chamber is released and enters the first chamber, and the flame-retardant material suppresses the spread of combustion. This helps to reduce the risk of the combustion of the battery cell spreading outside.

An optional solution of the present application further provides a battery including the battery cell according to any one of the above optional solutions.

An optional solution of the present application further provides an electric device including the battery cell according to any one of the above optional solutions.

### BRIEF DESCRIPTION OF THE DRAWINGS

In order to more clearly illustrate the technical solutions in the embodiments of the present application, the drawings required for use in the embodiments of the present application will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments;
FIG. 2 is a schematic diagram of an exploded structure of a battery according to some embodiments;
FIG. 3 is a schematic diagram of an exploded structure of a battery cell according to some embodiments;
FIG. 4 is a schematic structural diagram of a battery cell according to some embodiments;
FIG. 5 is a semisectional view of a battery cell according to some embodiments along a cross-section perpendicular to the X direction;
FIG. 6 is a schematic diagram of the portion A in FIG. 5;
FIG. 7 is a semisectional view of a battery cell according to some embodiments along a cross-section perpendicular to the X direction;
FIG. 8 is a semisectional view of a battery cell according to some embodiments along a cross-section perpendicular to the Y direction;
FIG. 9 is a semisectional view of a battery cell according to some embodiments along a cross-section perpendicular to the Z direction.

Reference numerals in the detailed description are as follows:
1000: vehicle;
100: battery; 200: battery control system; 300: motor;
10: case; 11: first part; 12: second part;
20: battery cell; 2: shell; 21: end cover; 21a: electrode terminal; 22: shell body; 220: wall; 221: outer layer wall; 222: inner layer wall; 223: flame-retardant layer; 224: first wall; 23: electrode assembly; 231: negative electrode plate; 232: positive electrode plate; 24: tab; 25: first chamber; 26: second chamber; 3: temperature sampling member; 41: wire harness; 5: connector;
001: extension region; 002: turning region.

### DETAILED DESCRIPTION

To make the objectives, technical solutions, and advantages of the embodiments of the present application clearer, the technical solutions in the embodiments of the present application will be clearly and completely described hereinafter with reference to the drawings in the embodiments of the present application. Apparently, the described embodiments are merely some embodiments of the present application, rather than all of the embodiments. Components of the embodiments of the present application generally described and illustrated in the drawing herein may be arranged and designed in various configurations.

In the description of the present application, it should be noted that the terms "internal", "external", and the like indicate orientations or positional relationships based on orientations or positional relationships shown in the drawings, or orientations or positional relationships commonly assumed when using the product of the present application. These terms are merely for the convenience of describing the present application and simplifying the description, rather than indicating or implying that the apparatus or element referred to must have a specific orientation or be constructed and operated in a specific orientation, and thus should not be construed as limiting the present application. Furthermore, the terms "first", "second", and the like are used for distinguishing descriptions only and shall not be construed as indicating or implying relative importance.

In the description of the present application, it should be noted that unless otherwise explicitly specified or defined, the terms "dispose" and "connect" shall be construed broadly and may be, for example, fixed connection, detachable connection, or integrated connection, or direct connection or indirect connection via an intermediate, or internal communication between two elements. For those of ordinary skill in the art, the specific meaning of the above terms in the present application may be understood according to the specific condition.

At present, judging from the development of the market situation, power batteries are applied more and more extensively. Power batteries are not only applied in energy storage power systems such as hydropower, thermal power, wind power and solar power stations, but are also widely applied in electric transportation vehicles such as electric bicycles, electric motorcycles, electric vehicles, as well as in military equipment, aerospace and other fields. As the application fields of the power batteries continue to expand, the market demand thereof is also increasing.

With the widespread use of electric devices such as electric vehicles, electric flying devices, and portable electronic devices, the energy density of batteries is also increasing. However, the reliability of the cell is reduced while energy demands are met, and the thermal runaway of electric devices is common in the market.

Main reasons for the thermal runaway of electric devices are as follows: When a short circuit or the like occurs in an electrode assembly in the battery cell, the temperature of the electrode assembly rises sharply, and the abnormal temperature rise easily results in the combustion of the electrode assembly and the high temperature quickly results in thermal runaway of adjacent battery cells, thereby resulting in more serious system thermal runaway or even explosion.

From a technical perspective, it is difficult to completely solve thermal runaway, and what can be done is only adopting various schemes to reduce the probability of thermal runaway. For example, when the temperature rises to a predetermined temperature, an early warning is provided in advance, and the working state of the battery is adjusted in time to reduce the voltage of the battery or allow the battery to stop work temporarily. This can effectively inhibits continued temperature rise of the battery and thereby reduce the probability of thermal runaway.

To implement functions of precise early warning and timely adjustment, the battery control system need to be high in precision for temperature monitoring of the battery. If the battery control system cannot accurately monitor the actual temperature of the battery, the battery control system may not accurately identify whether the temperature of the battery is higher than a critical value, and thus, the battery control system may not adjust the battery in time, resulting in thermal runaway of the battery.

The principle of temperature monitoring is to sample the temperature of the battery via a temperature sampling member such as a temperature sensor and return the sampling data to the battery control system. It can be seen that one of the factors determining the temperature monitoring precision is the accuracy of data acquired by the temperature sampling member. One of the factors affecting data accuracy is the distance between the temperature sampling member and the to-be-sampled region. When the temperature sampling member is closer to the to-be-sampled region, the data accuracy is higher.

By fixedly connecting the temperature sampling member to the surface of the shell of the battery cell, the temperature state of the battery cell can be acquired in real time. However, the temperature sampling member disposed in this way is essentially configured to acquire the temperature of the surface of the shell. The shell has a certain thickness. After heat conducting through the shell, the temperature of the shell is usually lower than the actual temperature of the electrode assembly in the current state. Because the shell is filled with electrolyte, if the temperature sampling member is directly disposed inside the shell, the temperature sampling member will be directly in contact with the electrolyte, and as a result, the temperature sampling member will be corroded by the electrolyte.

In addition, during the mounting process in which the battery cells are assembled into a battery, the temperature sampling member may fall off from the battery cells due to factors such as collision.

In view of this, some embodiments of the present application provide a battery cell. The battery cell includes a shell, and the shell includes a plurality of walls; the plurality of walls define a first chamber configured to accommodate an electrode assembly, a second chamber is provided inside the wall of the shell, and a temperature sampling member is accommodated in the second chamber. Compared with being connected to the outer surface of the shell, the temperature sampling member is closer to the first chamber and the electrode assembly when being accommodated in the second chamber, and thus the temperature data acquired by the temperature sampling member is closer to the actual temperature of the electrode assembly, such that the accuracy of the data acquired by the temperature sampling member can be improved. This further helps the battery control system to more accurately identify the state of the battery cell, thereby reducing the probability of thermal runaway.

In addition, allowing the temperature sampling member to be accommodated in the second chamber reduces the probability of the temperature sampling member falling off because of the direct collision with other battery cells or other external objects.

The battery cell disclosed in the embodiments of the present application can be used in, but is not limited to be used in, electric devices such as vehicles, ships, or aircrafts. The battery cell, the battery, or the like disclosed in the present application may be used for composing the power system of the electric device. This helps to reduce the probability of thermal runaway and improve the operational stability of the electric device.

The embodiments of the present application provide an electrical device using a battery as a power source. The electric device may be, but is not limited to, a mobile phone, a tablet, a laptop computer, an electric toy, an electric tool, an electric bicycle, an electric vehicle, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

For the convenience of description, an embodiment of the present application in which a vehicle 1000 is taken as the example of the electric device is used for description.

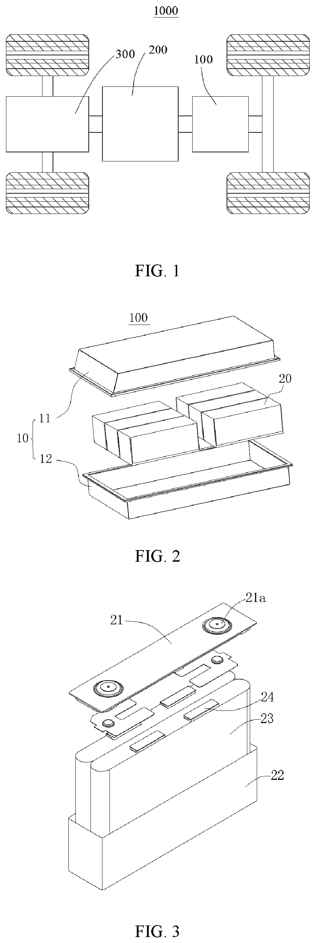

Referring to FIG. 1, FIG. 1 is a schematic structural diagram of a vehicle 1000 provided according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is provided inside the vehicle 1000, and the battery 100 may be provided at a bottom, a head, or a tail of the vehicle 1000. The battery 100 may be used for powering the vehicle 1000. For example, the battery 100 may serve as an operation power source of the vehicle 1000. The vehicle 1000 may further include a battery control system 200 and a motor 300. The battery control system 200 is used for controlling the battery 100 to power the motor 300, for example, for operation power needed for starting, navigating, and driving of the vehicle 1000.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of a battery 100 provided according to some embodiments of the present application. The battery 100 includes a case 10 and a battery cell 20. The battery cell 20 is accommodated in the case 10. The case 10 is configured to provide an accommodating space for the battery cell 20, and the case 10 can be of various structures. In some embodiments, the case 10 may include a first part 11 and a second part 12. The first part 11 and the second part 12 are mutually lidded onto each other, and the first part 11 and the second part 12 jointly define an accommodating space for accommodating the battery cells 20. The second part 12 may be a hollow structure with one end open, and the first part 11 may be a plate-like structure. The first part 11 is lidded onto the open side of the second part 12, such that the first part 11 and the second part 12 jointly define the accommodation space. The first part 11 and the second part 12 may also each be a hollow structure with one side open, and the open side of the first part 11 is lidded onto the open side of the second part 12. Certainly, the case 10 formed by the first part 11 and the second part 12 may be in various shapes such as cylindrical and rectangular parallelepiped.

In the battery 100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, it may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving electrical connection between the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped, or in other shapes.

Referring to FIG. 3, FIG. 3 is a schematic diagram of an exploded structure of a battery cell 20 provided according to some embodiments of the present application. The battery cell 20 refers to the smallest unit forming a battery. As shown in FIG. 3, the battery cell 20 includes an end cover 21, a shell body 22, an electrode assembly 23, and other functional components.

The end cover 21 is a component that is lidded onto the opening of the shell body 22 to isolate the internal environment of the battery cell 20 from the external environment. Without limitation, the shape of the end cover 21 may be adapted to the shape of the shell body 22 to match the shell body 22. Optionally, the end cover 21 may be made of a material with a certain hardness and strength (for example, aluminum alloy), such that the end cover 21 is not easily deformed when being squeezed or collided. This enables the battery cell 20 to have higher structural strength and reduces the severity of damage to a power battery after collision. Functional components, for example, an electrode terminal 21a, may be disposed on the end cover 21. The electrode terminal 21a may be configured to be electrically connected to the electrode assembly 23 to output or input the electric energy of the battery cell 20. The end cover 21 may also be made of a variety of materials, such as copper, iron, aluminum, stainless steel, aluminum alloy, and plastic, which is not specifically limited in the embodiments of the present application. In some embodiments, an insulating member may be disposed on the inner side of the end cover 21, and the insulating member may be configured to isolate an electrical connecting part in the shell body 22 from the end cover 21 to reduce the risk of a short circuit. For example, the insulating member may be plastic, rubber, or the like.

The shell body 22 is a component configured to form the internal environment of the battery cell 20 in combination with the end cover 21. The formed internal environment may be used to accommodate the electrode assembly 23, electrolyte, and other components. The shell body 22 and the end cover 21 may be independent components. An opening may be provided on the shell body 22, and the end cover 21 is lidded onto the opening to form the internal environment of the battery cell 20. Without limitation, the end cover 21 and the shell body 22 may be integrated. Specifically, the end cover 21 and the shell body 22 may form a common connection surface before other components are placed in the shell body, and when the interior of the shell body 22 needs to be encapsulated, the end cover 21 is lidded onto the shell body 22. The shell body 22 may be in various shapes and sizes, such as rectangular parallelepiped, cylindrical, and a hexagonal prism. Specifically, the shape of the shell body 22 may be determined based on the specific shape and size of the electrode assembly 23. The shell body 22 may be made of a plurality of materials, such as copper, iron, aluminum, stainless steel, aluminum alloy, and plastic, which is not specifically limited in the embodiments of the present application.

The electrode assembly 23 is a component where the electrochemical reaction occurs in the battery cell 20. One or more electrode assemblies 23 may be accommodated in the shell body 22. The electrode assembly 23 is mainly formed by winding or stacking a positive electrode plate and a negative electrode plate, and a separation film is usually disposed between the positive electrode plate and the negative electrode plate. The portions of the positive electrode plate and the negative electrode plate that contain the active substance constitute the body part of the electrode assembly, and the portions of the positive electrode plate and the negative electrode plate that do not contain the active substance each constitute a tab 24. During charging and discharging of the battery, the positive-electrode active substance and the negative-electrode active substance react with the electrolyte, and the tabs 24 are connected to the electrode terminals to form a current circuit.

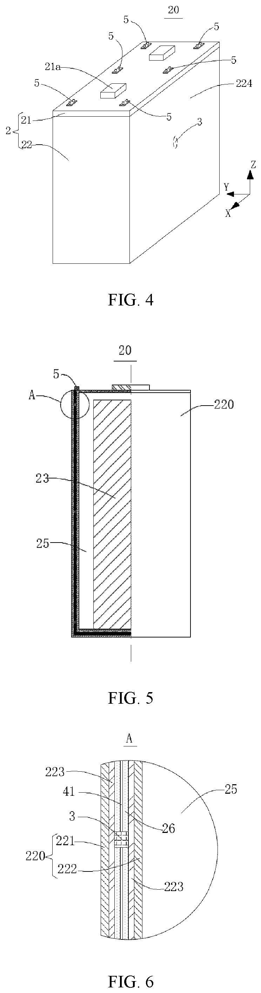

FIG. 4, FIG. 5, and FIG. 6 are schematic structural diagrams of a battery cell provided according to embodiments of the present application. The battery cell includes a shell 2, an electrode assembly 23, and a temperature sampling member 3. The shell 2 includes a plurality of walls 220. For example, a rectangular parallelepiped battery cell shown in FIG. 4 includes six walls 220. Battery cells of other shapes may also have a different number of walls 220. The plurality of walls 220 define a first chamber 25, and the electrode assembly 23 is accommodated in the first chamber 25. A second chamber 26 is formed inside at least one wall 220, and the temperature sampling member 3 is accommodated in the second chamber 26.

The shell 2 is a shell body structural member formed by fixedly connecting the end cover 21 to the shell body 22. The wall 220 is a solid part of the shell body structural member. For example, the wall 220 may be one of the shell body 22 and the end cover 21, or both the shell body 22 and the end cover 21 may be the wall 220.

The plurality of walls 220 are connected to each other to define a closed cavity. The closed cavity is the first chamber 25. The first chamber 25 is configured to accommodate the electrode assembly 23 and the electrolyte.

The second chamber 26 is located inside the wall 220, that is, a cavity is provided in the solid part of the wall 220, and the cavity is the second chamber 26. The solid part of the wall 220 separates the second chamber 26 from the first chamber 25.

The temperature sampling member 3 is an original copy for acquiring temperature data. For example, the temperature sampling member 3 may be a temperature sensor. The temperature sampling member 3 may convert the acquired temperature data into an electric signal and feed the electric signal back to the battery control system 200, such that the battery control system 200 can respond in real time based on the temperature of the battery cell 20 (for example, the battery control system 200 may perform the following for the battery cell 20: providing an early warning, a limiting the current and voltage, cutting off the circuit, or other operations).

The position of the temperature sampling member 3 in the second chamber 26 is fixed, that is, the temperature sampling member 3 is connected to the second chamber 26. For example, the temperature sampling member 3 may be bonded to the inner wall of the second chamber 26.

Because the second chamber 26 is located inside the wall 220, the temperature sampling member 3 accommodated in the second chamber 26 is closer to the electrode assembly 23 and the electrolyte, and thus the temperature acquired by the temperature sampling member 3 is closer to the actual temperatures of the electrode assembly 23 and the electrolyte. Furthermore, when the second chamber 26 is closed, the internal environment of the second chamber 26 is stable, and therefore, the temperature sampling member 3 is less affected by the internal environment. This also helps to enable the temperature acquired by the temperature sampling member 3 to be closer to the actual temperatures of the electrode assembly 23 and the electrolyte. Allowing the temperature sampling member 3 to be mounted in the second chamber 26 enables the battery control system 200 to more accurately identify the actual temperature state of the electrode assembly 23, such that the battery control system 200 can respond in time when the battery cell 20 has an abnormal temperature, thereby reducing the probability of thermal runaway of the battery cell 20.

Furthermore, because the temperature sampling member 3 is accommodated in the second chamber 26, the second chamber 26 also improves the stability of the connection between the temperature sampling member 3 and the shell 2. For example, in the process of assembling the battery cells 20 into the battery 100, because the temperature sampling member 3 is not exposed on the outer surface of the shell 2, an external object does not directly collide with the temperature sampling member 3. This reduces the risk of the temperature sampling member 3 falling off the shell 2. For another example, when the second chamber 26 is closed, the internal environment of the second chamber 26 is stable (for example, the humidity in the second chamber 26 does not change in general). The stable environment also helps to maintain the stability of the connection between the temperature sampling member 3 and the shell 2.

When the battery 100 is under impact vibration conditions, the second chamber 26 may further provide a buffering function to absorb the vibration, thereby prolonging the service life of the battery 100.

In some embodiments, there are a plurality of temperature sampling members 3, and the plurality of temperature sampling members 3 are distributed at a plurality of positions in the second chamber 26.

In the working process of the battery cell 20, different regions of the battery cell 20 may have different temperatures. The specific reason is that different amounts of heat emits from different positions of the electrode assembly 23 during working, and the probabilities of heat accumulation or a short circuit at different positions of the electrode assembly 23 are different. After the heat is transmitted to the shell 2, there may be a temperature difference between different positions on the shell 2. If the temperature of only one position is measured, the temperature state of the battery cell 20 may not be fully reflected.

It should be noted that the plurality of positions at which the temperature sampling members 3 are distributed are not completely selected randomly. These positions may be positions where local high temperatures are prone to occur that are selected based on test data or experience, such that the temperature sampling members 3 may be arranged at these positions.

Allowing the temperature sampling members 3 to be distributed at a plurality of positions of the second chamber 26 enables the temperature sampling members 3 to acquire temperatures at a plurality of positions of the shell 2, such that the temperature data transmitted to the battery control system 200 by the temperature sampling members 3 is more comprehensive, thereby enabling the control over the battery 100 by the battery control system 200 to be more accurate and sensitive. For example, once an abnormal temperature difference or temperature rise occurs at one or more of these positions, the battery control system 200 can identify the abnomality and quickly adjust the working state of the battery cell 20 or cut off the circuit, thereby reducing the probability of thermal runaway.

The probabilities of short circuit or heat accumulation are not exactly the same at different positions of the electrode assembly 23, and there are some positions with higher probability of a short circuit or heat accumulation. Therefore, in some embodiments, the temperature sampling members 3 are specifically disposed at the positions with higher probability of a short circuit or heat accumulation. This helps to improve the response speed of the battery control system 200, thereby further reducing the probability of thermal runaway.

In some embodiments, referring to FIG. 4, the wall having the largest area among the plurality of walls 220 is a first wall 224, a second chamber 26 is formed inside the first wall 224, at least one temperature sampling member 3 is disposed in the second chamber 26 inside the first wall 224, and the temperature sampling member 3 is located at the center of the first wall 224. That is, at least one temperature sampling member 3 is disposed in the second chamber 26 and is located at a position indicated by the dotted line in FIG. 4.

The first wall 224 is a wall with a larger or largest area among the walls 220. Referring to FIG. 4, in the figure, the X direction is the length direction of the battery cell 20, the Y direction is the width direction of the battery cell 20, and the Z direction is the height direction of the battery cell 20. In the embodiment shown in FIG. 4, the height of the battery cell 20 is greater than the width of the battery cell 20. Therefore, the first wall 224 is correspondingly the wall 220 in a plane formed along the X direction and the Z direction. Certainly, if the height of the battery cell 20 is smaller than the width of the battery cell 20, the first wall 224 is the wall 220 in a plane formed along the X direction and the Y direction.

The center of the first wall 224 means the geometric center of the first wall 224, that is, the part indicated by the dotted line in FIG. 4.

Because of the large area of the first wall 224, when the electrode assembly 23 swells and squeezes the first wall 224, the first wall 224 expands to a greater extent after being squeezed. Due to large transmission impedance of the electrolyte and poor local dynamics after swelling, when the electrode assembly 23 has problems such as lithium plating caused by swelling or a short circuit caused by a foreign matter, the first wall 224 is more prone to heat accumulation, resulting in an abnormally high temperature or abnormal temperature rise. The temperature sampling member 3 mounted at the center of the first wall 224 may accurately acquire the temperature of the first wall 224 to enable the battery control system 200 to respond quickly.

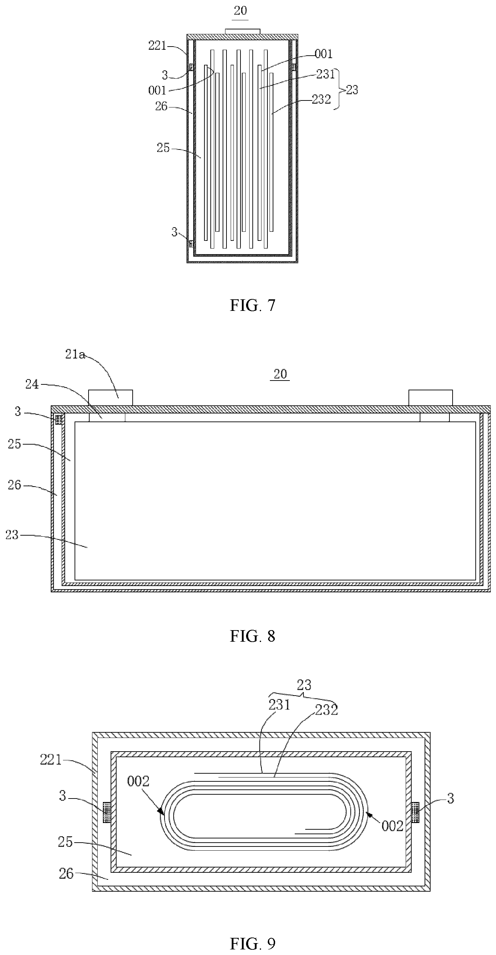

In some embodiments, referring to FIG. 7, the electrode assembly 23 includes a negative electrode plate 231 and a positive electrode plate 232. The negative electrode plate 231 and the positive electrode plate 232 are stacked along the thickness direction thereof. The overlapped part of the negative electrode plate 231 and the positive electrode plate 232 is a body region, and the part of the negative electrode plate 231 where the edge of the negative electrode plate extends beyond the edge of the positive electrode plate 232 forms an extension region 001. At least one temperature sampling member 3 is disposed at a position corresponding to the extension region 001. FIG. 7 is mainly used to illustrate an overlapping structure of the positive electrode plate 232 and the negative electrode plate 231, and the structure of the tab 24 of the electrode assembly 23 is omitted. It should be noted that the tab 24 may extend out of one side of the electrode assembly 23, and the tab 24 may also extend out of two opposite sides of the electrode assembly 23.

The position corresponding to the extension region 001 is a position that is located in the second chamber 26 and has a distance to the extension region 001 relatively shorter than a distance between another position in the second chamber 26 and the extension region 001. For example, referring to FIG. 7, the temperature sampling member 3 may be disposed at a position that is located in the second chamber 26 and is flush with the extension region 001, that is, at a position with a shortest straight-line distance to the extension region 001. In addition, referring to FIG. 7, when there are extension regions 001 on both the upper part and the lower part in the figure, two temperature sampling members 3 may be disposed to respectively acquire the temperatures of the upper and lower extension regions 001. Certainly, the position corresponding to the extension region 001 is not strictly limited to the position with the shortest straight-line distance to the extension region 001, and slight deviation is also allowable. At the position corresponding to the extension region 001, the temperature sampling member 3 can relatively accurately acquire the temperature of the extension region 001.

In the battery, because the negative electrode plate 231 needs to receive lithium ions precipitated from the positive electrode plate 232, if the area of the negative electrode plate 231 is not large enough, the negative electrode plate 231 may not have enough positions for receiving the lithium ions, and excess lithium ions may be precipitated from the negative electrode plate 231 to form lithium crystals that pierce the separation film, resulting in a short circuit. Therefore, the edge of the negative electrode plate 231 extends beyond the edge of the positive electrode plate 232 to form the extension region 001, and more positions for receiving the lithium ions are provided by using the extension region 001.

When the number of lithium ions jumping out of the positive electrode exceeds the capacity of the extension region 001, the lithium ions first result in heat accumulation or even a short circuit in the extension region 001, thereby resulting in local temperature rise in the extension region 001. Therefore, the state of the extension region 001 may be fed back to the battery control system 200 timely by measuring the temperature of the extension region 001, such that when the temperature of the extension region 001 is abnormal, the battery control system 200 can respond in time, thereby reducing the probability of thermal runaway.

In some embodiments, referring to FIG. 8, at least one temperature sampling member 3 is disposed at a position corresponding to the tab 24.

The position corresponding to the tab 24 is a position that is located in the second chamber 26 and has a distance to the tab 24 relatively shorter than a distance between another position in the second chamber 26 and the tab 24. For example, referring to FIG. 8, the temperature sampling member 3 may be disposed at a position that is located in the second chamber 26 and is flush with the tab 24, that is, at a position with a shortest straight-line distance to the tab 24. Certainly, the position corresponding to the tab 24 is not strictly limited to the position with the shortest straight-line distance to the tab 24, and slight deviation is also allowable. The difference between the temperature acquired at the position corresponding to the tab 24 and the actual temperature of the tab 24 is small.

In the electrode assembly 23, the tab 24 is an overcurrent converging part of a cell. When an abnormally large current passes through the battery, the tab 24 is more likely to experience local abnormal temperature rise. Therefore, the temperature of the tab 24 is acquired, such that the battery control system can respond in time when the temperature of the tab 24 is abnormal, thereby helping to reduce the probability of thermal runaway.

In some embodiments, referring to FIG. 9, the electrode assembly 23 includes a turning region 002, and at least one temperature sampling member 3 is disposed at a position corresponding to the turning region 002.

The turning region 002 is a bending region formed by winding the electrode assembly 23. For example, in FIG. 9, arc-shaped regions formed on left and right sides of the electrode assembly 23 are the turning regions 002.

The position corresponding to the turning region 002 is a position that is located in the second chamber 26 and has a distance to the turning region 002 relatively shorter than a distance between another position in the second chamber 26 and the turning region 002. For example, referring to FIG. 9, the temperature sampling member 3 may be disposed at a position that is in the second chamber 26 and has a shortest straight-line distance to the turning region 002. Alternatively, the actual mounting position of the temperature sampling member 3 may also be slightly deviated from the position with the shortest straight-line distance.

The turning region 002 is bent, and this bending shape is more prone to result in structural defects such as cracking. Therefore, compared with the straight region of the electrode assembly 23, heat accumulation or a short circuit is more likely to occur in the turning region 002, thereby resulting in thermal runaway. Therefore, the temperature of the turning region 002 is acquired, such that the battery control system can respond in time when the temperature of the turning region 002 is abnormal. This helps to reduce the probability of thermal runaway.

In some embodiments, referring to FIG. 4 and FIG. 5, the battery cell 20 further includes a connector 5. The connector 5 is connected to the outer surface of the shell 2, and the connector 5 is in telecommunication connection to the temperature sampling member 3.

The connector 5 is a device that is in telecommunication connection to the battery control system, and the connector 5 has a function of achieving signal transmission. For example, the connector 5 may be a plug. For the specific structure of the connector 5, reference may be made to the prior art. This is not described herein again. The temperature sampling member 3 is in telecommunication connection to the connector 5 and then connected to the battery control system 200 via the connector 5 to transmit the acquired temperature data to the battery control system 200.

The battery cell 20 can be quickly connected to the battery control system 200 by providing the connector 5, thereby helping to simplify the mounting process of the battery 100 and improving the mounting efficiency.

In some embodiments, referring to FIG. 6, the battery cell 20 further includes a wire harness 41. The connector 5 is in telecommunication connection to the temperature sampling member 3 via the wire harness 41. At least a part of the wire harness 41 is accommodated in the second chamber 26.

The wire harness 41 is a member for transmitting an electric signal between the battery cell 20 and the connector 5. For example, the wire harness 41 may be an electric wire. The wire harness 41 may be movably accommodated in the second chamber 26, and the wire harness 41 may also be fixedly connected to the inner wall of the second chamber 26.

Because at least a part of the wire harness 41 is accommodated in the second chamber 26, the second chamber 26 isolates the wire harness 41 accommodated in the second chamber 26 from the outside. This helps to reduce the probability that the wire harness 41 is directly in collision, thereby reducing the probability of the temperature sampling member 3 falling off. In addition, since the wire harness 41 is at least partially accommodated in the second chamber 26, the second chamber 26 serves as a receptor for the wire harness 41. This correspondingly effectively reduces the part of the wire harness 41 exposed to the outside. The wire harness 41 may even be completely accommodated in the second chamber 26 to facilitate the receiving of the wire harness 41, thereby helping to allow the outer surface of the battery cell 20 to be neater.

In some embodiments, referring to FIG. 4, the connector 5 is disposed on the end cover 21.

Because the end cover 21 is usually disposed at the top, there is less interference from external objects on the end cover 21. Disposing the connector 5 on the end cover 21 helps to simplify the operation of connecting the battery control system to the connector 5, thereby helping to improve the assembly efficiency of the battery 100.

In some embodiments, referring to FIG. 6, at least one wall 220 includes an outer layer wall 221 and an inner layer wall 222 that are spaced apart from each other, and the second chamber 26 is formed between the outer layer wall 221 and the inner layer wall 222.

The outer layer wall 221 and the inner layer wall 222 are two independent wall structures. The outer layer wall 221 is connected to the inner layer wall 222 to form the wall 220. There is a gap between the outer layer wall 221 and the inner layer wall 222, and the gap may form the second chamber 26. The outer layer wall 221 and the inner layer wall 222 may be relatively parallel, or the outer layer wall 221 and the inner layer wall 222 may not be relatively parallel.

Because the outer layer wall 221 and the inner layer wall 222 are independent of each other, they may be manufactured independently and then assembled and connected in a subsequent process. For example, when the shell 2 is manufactured, two shell bodies, namely, one large shell body and one small shell body, may be manufactured separately. The large shell body forms the outer layer wall 221, and the small shell body forms the inner layer wall 222. The small shell body is sleeved with the large shell body, and the two shell bodies are fixedly connected. The gap between the two shell bodies forms the second chamber 26.

Compared with manufacturing the second chamber 26 in the wall 220 of a complete shell 2, an embodiment in which manufacturing and assembling are performed separately helps to reduce the manufacturing difficulty, thereby improving the manufacturing efficiency.

Furthermore, because the outer layer wall 221 and the inner layer wall 222 are independent of each other, the outer layer wall 221 and the inner layer wall 222 may be made of different materials to achieve different functions.

In some embodiments, referring to FIG. 6, the outer layer wall 221 is made of aluminum or steel, and the inner layer wall 222 is made of aluminum, aluminum alloy, or an aluminum-plastic film.

The aluminum, aluminum alloy, steel, and aluminum-plastic film are existing materials. The aluminum may be a metal material made of aluminum element, the aluminum alloy may be an alloy material mainly made of aluminum, the steel is a general term for iron-carbon alloy with a specific content of carbon, and the aluminum-plastic film is an existing material with good electrolyte resistance.

The battery cell 20 has certain requirements for the strength and corrosion resistance of the shell 2, and the aluminum or steel has relatively good strength and corrosion resistance. Because the inner layer wall 222 is in direct contact with the electrolyte, the inner layer wall 222 is required to have higher insulation and corrosion resistance, and the aluminum-plastic film, aluminum, or aluminum alloy can substantially meet the requirements for insulation and corrosion resistance of the inner layer wall 222. Because the outer layer wall 221 is not in contact with the electrolyte but the outer layer wall 221 is in contact with other battery cells 20, devices, or apparatuses, the outer layer wall 221 is required to have higher strength. When the outer layer wall 221 is made of steel, the outer layer wall 221 has good strength. This helps to reduce the probability of deformation of the battery cell 20 and reduce the severity of damage to a power battery after collision. Certainly, in some embodiments, the outer layer wall 221 may also be made of aluminum.

Furthermore, the costs of the aluminum or steel are lower than that of the aluminum-plastic film. Therefore, based on this embodiment, the production costs can be more effectively controlled.

In addition, the aluminum, aluminum alloy, and aluminum-plastic film have a certain deformation capacity, and thus can provide a buffering function for the battery 100 under impact vibration conditions. During the use of the battery 100, the first chamber 25 also tends to swell as the chemical reaction of the electrolyte proceeds. Because the inner layer wall 222 has a certain deformation force, the second chamber 26 can provide a swelling space. Therefore, this embodiment can enable the adaptation to the swelling trend of the first chamber 25, which helps to prolong the service life of the battery cell 20.

In some embodiments, a flame-retardant layer 223 is disposed on the surface of the second chamber 26, that is, the flame-retardant layer 223 is disposed on the inner wall of the second chamber 26.

The flame-retardant layer 223 is a coating having flame retardant effect, and the flame-retardant layer 223 is applied on the surface of the second chamber 26. Alternatively, the flame-retardant layer 223 is a separate member having flame retardant effect, and the flame-retardant layer 223 is connected to the surface of the second chamber 26.

The problem of thermal runaway of the battery cell 20 cannot be completely avoided. Thermal runaway is caused by sharp temperature rise in the electrode assembly 23, and thermal runaway may even result in the combustion of the electrode assembly 23. When thermal runaway occurs, the temperature of the shell 2 is increased. When the temperature is too high, the shell 2 may even melt down. By providing the flame-retardant layer 223, when thermal runaway occurs, the flame-retardant layer 223 can slow down the melting speed of the shell 2, reduce the degree of thermal runaway, and slow down the speed at which combustion spreads outside the battery cell 20 to buy time for emergency processing. In addition, the flame-retardant layer 223 further has certain insulation and anti-corrosion capabilities and thus also helps to prolong the service life of the battery cell 20.

In some embodiments, the battery cell 20 further includes a flame-retardant material, and the flame-retardant material is accommodated in the second chamber 26.

The flame-retardant material is a material that has heat insulation effect and can slow down the spread of combustion. For example, the flame-retardant material is a phosphate flame retardant or a phosphazene flame retardant, or the flame-retardant layer 223 is a mixture including a phosphorus-based flame retardant. The flame-retardant material is in the form of any one or a combination of two or more of liquid, gas, a particle, or a plate.

The flame-retardant material is used to reduce the probability of combustion. When the battery 100 is short-circuited, the temperature in the first chamber 25 rises sharply, and the part (that is, the inner layer wall 222) of the wall 220 correspondingly in contact with the first chamber 25 melts down first. In this case, the flame-retardant material accommodated in the second chamber 26 is released, and the flame-retardant material is directly in contact with each assembly or component in the first chamber 25 (for example, the flame-retardant material is directly in contact with the electrode assembly 23 or the electrolyte). Because the flame-retardant material can suppress combustion, based on this embodiment, the speed at which combustion spreads outside the battery cell 20 can be slowed down. This reduces the degree of thermal runaway and buys time for emergency processing.

If the flame-retardant material is in the form of a fluid with fluidity, for example, liquid, gas, or a particle, when the part (that is, the inner layer wall 222) of the wall 220 correspondingly in contact with the first chamber 25 melts down, the flame-retardant material flows into the first chamber 25. When being in contact with the flame, the flame-retardant material has certain effect of suppressing combustion, thereby suppressing the spread of combustion. If the flame-retardant material is in the form of a plate, when the part (that is, the inner layer wall 222) of the wall 220 correspondingly in contact with the first chamber 25 melts down, the flame-retardant material can suppress the heat transfer and suppress combustion spreading outside.

In some embodiments, the battery control system includes an early warning module and a control module. The early warning module and the control module are in telecommunication connection to the temperature sampling member 3. The early warning module is configured to send an alarm when the difference between temperatures acquired by the temperature sampling members 3 is greater than a preset value or when the temperature collected by a certain temperature sampling member 3 is higher than a preset value, thereby prompting a user with a short circuit of the battery cell 20. The control module is configured to limit the charging and discharging mode of the battery cell or limit the upper limit voltage of the battery cell 20 when the temperature data acquired by the temperature sampling members 3 is abnormal (including the difference between temperatures of different regions of the battery cell 20 is large or the temperature in a certain region rises abnormally), thereby reducing the probability of thermal runaway or combustion.

The early warning module is a device that can send an alarm. For example, the early warning module is a buzzer. When it is identified that the temperature data acquired by the temperature sampling member 3 is abnormal, the early warning module sends a sound signal to prompt the battery cell 20 with a risk of thermal runaway. The control module is a device for controlling the charging and discharging mode of the battery cell 20, limiting the upper limit voltage of the battery cell 20, or controlling the circuit of the battery cell 20. For specific structures of the early warning module and the control module, reference may be made to related devices in the prior art. This is not described herein again.

In some embodiments, referring to FIG. 4 to FIG. 9, the battery cell 20 includes a shell 2, an electrode assembly 23, a temperature sampling member 3, and a connector 5. The shell 2 includes an end cover 21 and a shell body 22. The end cover 21 is fixedly connected to the shell body 22 to define a first chamber 25, and the electrode assembly 23 is accommodated in the first chamber 25. The shell body 22 includes a plurality of walls 220, and the plurality of walls 220 are fixedly connected to form a solid part of the shell body 22. A second chamber 26 is provided inside the wall 220, and the temperature sampling member 3 is accommodated in the second chamber 26. A flame-retardant layer 223 is disposed on the wall surface of the second chamber 26. In addition, the flame-retardant material is further accommodated in the second chamber 26 to reduce the probability of the combustion spreading outside the battery cell 20. The connector 5 is connected to the outer surface of the end cover 21, and the temperature sampling member 3 is in telecommunication connection to the connector 5 via a wire harness 41, such that the temperature data acquired by the temperature sampling member 3 can be transmitted via the connector 5. The wire harness 41 is completely accommodated in the second chamber 26 to reduce the probability that the wire harness 41 is in direct collision or directly dragged and thereby reduce the probability of the temperature sampling member 3 falling off.

Some embodiments of the present application further provide a battery 100. The battery 100 includes the battery cell 20 provided in any one of the foregoing embodiments.

Some embodiments of the present application further provide an electric device including the battery cell 20 provided in the foregoing embodiments.

It should be noted that unless conflicting, the features of the embodiments in the present application may be combined with each other. The differences between the embodiments above are highlighted in the description of these embodiments, and reference may be made to each other for the identical or similar parts. For brevity, details are not described herein again.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A battery cell, comprising:
a shell, comprising a plurality of walls, the plurality of walls defining a first chamber and a second chamber being formed inside at least one of the walls;
an electrode assembly, accommodated in the first chamber; and
a temperature sampling member, accommodated in the second chamber.

2. The battery cell according to claim 1, wherein there are a plurality of temperature sampling members, and the plurality of temperature sampling members are distributed at a plurality of positions in the second chamber.

3. The battery cell according to claim 1 or 2, wherein a wall having a largest area among the plurality of walls is a first wall, the second chamber is formed inside the first wall, at least one of the temperature sampling members is disposed in the second chamber inside the first wall, and the temperature sampling member is located at a center of the first wall.

4. The battery cell according to any one of claims 1 to 3, wherein the electrode assembly comprises a positive electrode plate and a negative electrode plate, the negative electrode plate comprises a body region overlapping the positive electrode plate and an extension region extending beyond an edge of the positive electrode plate, and at least one of the temperature sampling members is disposed at a position corresponding to the extension region.

5. The battery cell according to any one of claims 1 to 4, wherein the electrode assembly comprises a tab, and at least one of the temperature sampling members is disposed at a position corresponding to the tab.

6. The battery cell according to any one of claims 1 to 5, wherein the electrode assembly comprises a turning region, and at least one of the temperature sampling members is disposed at a position corresponding to the turning region.

7. The battery cell according to any one of claims 1 to 6, wherein the battery cell further comprises a connector, the connector is disposed on an outer surface of the shell, and the temperature sampling member is in telecommunication connection to the connector.

8. The battery cell according to claim 7, wherein the battery cell further comprises a wire harness, the connector is connected to the temperature sampling member via the wire harness, and at least a part of the wire harness is accommodated in the second chamber.

9. The battery cell according to claim 7 or 8, wherein the shell comprises a shell body and an end cover, the shell body comprises an opening, the end cover seals the opening, the second chamber is formed in the shell body, and the connector is disposed on an outer surface of the end cover.

10. The battery cell according to any one of claims 1 to 9, wherein at least one of the walls comprises an outer layer wall and an inner layer wall spaced apart from each other, and the second chamber is formed between the outer layer wall and the inner layer wall.

11. The battery cell according to claim 10, wherein the inner layer wall is an aluminum-plastic film, or a material of the inner layer wall is aluminum or aluminum alloy; and/or
a material of the outer layer wall is aluminum, aluminum alloy, or steel.

12. The battery cell according to any one of claims 1 to 11, wherein a flame-retardant layer is disposed on a surface of the second chamber.

13. The battery cell according to any one of claims 1 to 12, wherein the battery cell further comprises a flame-retardant material, and the flame-retardant material is accommodated in the second chamber.

14. A battery, comprising the battery cell according to any one of claims 1 to 13.

15. An electric device, comprising the battery cell according to any one of claims 1 to 13.
